(19) Europäisches Patentamt
European Patent Office
Office européen des brevets

(11) Publication number: **0 104 391 B1**

# (12) EUROPEAN PATENT SPECIFICATION

(45) Date of publication of patent specification: **21.11.91**

(51) Int. Cl.5: **C08G 18/34**, C08G 18/42, C08G 69/00, C08G 69/44

(21) Application number: **83107971.0**

(22) Date of filing: **11.08.83**

## (54) Melt polymerization process for thermoplastic polyamides and polyester amides.

(30) Priority: **27.09.82 US 424418**

(43) Date of publication of application:
**04.04.84 Bulletin 84/14**

(45) Publication of the grant of the patent:
**21.11.91 Bulletin 91/47**

(84) Designated Contracting States:
**BE DE FR GB IT NL**

(56) References cited:
**DD-A- 5 388**
**DE-A- 2 150 151**
**FR-A- 2 378 000**
**US-A- 2 268 586**
**US-A- 4 016 144**

(73) Proprietor: **THE DOW CHEMICAL COMPANY**
**2030 Dow Center Abbott Road P.O. Box 1967**
**Midland Michigan 48640-1967(US)**

(72) Inventor: **Bonk, Henry Walter**
**51 Seiter Hill Road**
**Wallingford Connecticut 06492(US)**
Inventor: **Nelb II, Robert G.**
**30 Whitney Ridge Terrace**
**North Haven Connecticut 06518(US)**
Inventor: **Oertel III, Richard W.**
**59 Edgewood Drive**
**Guilford Connecticut 06437(US)**

(74) Representative: **Henkel, Feiler, Hänzel & Partner**
**Möhlstrasse 37**
**W-8000 München 80(DE)**

EP 0 104 391 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

### BACKGROUND OF THE INVENTION

#### 1. Field of the Invention

This invention relates to a process for the preparation of polyamides and related compounds from organic isocyanates and dicarboxylic acids and is more particularly concerned with a melt polymerization process for the reaction of organic diisocyanates with dicarboxylic acids and related compounds.

#### 2. Description of the Prior Art

The preparation of polyamides, i.e. polymers which contain a recurring amide linkage, by reaction of organic diamines with dicarboxylic acids and derivatives thereof such as acid chlorides, is well-known in the art. Such processes include solvent-free reactions in which the polymer is produced by melt condensation of the reaction components. Where the reactants are diamines and dicarboxylic acids, the reaction produces water of condensation and a number of methods of separating the water as steam from the reaction mixture are known. Illustrative of such methods and apparatus for achieving the result are those described in U.S. Patents 3,477,094; 3,492,791; 3,493,031; and 3,773,738.

More recently the production of polyamides by reaction of organic diisocyanates with dicarboxylic acids and related compounds have been described; see, for example, U.S. Patents 4,087,481; 4,115,372; and 4,156,065. In the case of these latter reactions the condensation results in the elimination of carbon dioxide. Hitherto, the reaction has been conducted in the presence of inert organic solvents. However, for commercial production the use of organic solvents of the type required is extremely undesirable both from the point of view of economics and from the requirement to avoid pollution of the atmosphere by discharge of such solvents from production facilities.

From US-A-2 268 586 there is known a process for preparation of polyamide in the absence of a solvent by mixing a diisocyanate and dicarboxylic acid in stoichiometric proportions, subjecting the reaction mixture for 4 to 10 hours to a temperature from 100 to 200° C and completing the reaction between 15 min to 2 hours above the melting point of the polymer at 200° to 280° C under degasing.

From DE-A- 21 50 151 there is known a process for the preparation of polyamide-imide-foams by reaction of an aromatic diisocyanate with a difunctional compound with a carboxylic acid anhydrate function and another function being able to react with a diisocyanate. Said process is carried out in a manner known per se, either discontinuously or continuously. In the latter case the reactants are continuously introduced into a heated conic mixing head. In doing this the reaction mixture is supplied with alternating movement to a translationally moving horizontal conveyor and treated by passing the conveyor with the reaction mixture thereon through a suitably programmed heating furnace.

Preferred examples for diisocyanates to be used are symmetric diisocyanates with two benzene rings, e. g. 4,4'-diisocyanatodiphenyl, 4,4'-diisocyanatodiphenylether, 4,4'-diisocyanatodiphenylsulfone or 4,4'-diisocyanatodiphenylmethane and other aromatic diisocyanates, e. g. toluylenediisocyanate, m- and p-phenylenediisocyanate and 1,5-naphtylenediisocyanate. Bi-functional compounds to be reacted with the diisocyanate are preferable aromatic dicarboxylic acids, e. g. iso- or terephtalic acid, diphenylmethane, 4,4'-dicarboxylic acid, diphenylether, 4,4'-dicarboxylic acid and phenylindenedicarboxylic acid.

It is an object of the present invention to provide a continuous process which can be carried out in the absence of inert organic solvents and which can be used to produce polymers containing amide linkages by reaction of organic diisocyanates with dicarboxylic acids or related compounds.

### SUMMARY OF THE INVENTION

This invention comprises a continuous process for the preparation, in the absence of an inert organic solvent, of a thermoplastic polymer with a recurring amide linkage by reacting an organic diisocyanate and a dicarboxylic acid in substantially stoichiometric proportions characterized by the steps of:

(a) continuously feeding an organic diisocyanate and a dicarboxylic acid in the liquid state and in substantially stoichiometric proportions to a mixing zone;

(b) mixing said reactants in said mixing zone and continuously passing said mixed reactants spread in the form of a relatively thin layer on a continuously moving conveyor means through a heating zone maintained at a temperature in the range of 100°C to 230°C the residence time in said heating zone being adjusted so that between 25 percent to 95 percent of the theoretical amount of carbon dioxide

necessary to achieve complete reaction has been evolved, and allow it to cool to solidify to an intermediate which is reduced to particulate form and

(c) completing the formation of the desired polymer by continuously melt extruding the intermediate so formed at a temperature above 230°C but below that at which degradation of the polymer occurs.

In the continuous process of the invention for carrying out the above reaction the organic diisocyanate and dicarboxylic acid are, advantageously mixed in the liquid state. The mixed reactants advantageously are feeded in a continuous manner on to a continuously moving conveyor means, eg an endless conveyor belt, whereupon the mixed reactants are passed on said conveyor means, eg on said belt through a heating zone maintained at the appropriate reaction temperature. The residence time in the heating zone is adjusted so that from approximately 25 to about 95 percent of the carbon dioxide, theoretically necessary to be eliminated in order to achieve complete reaction, has been evolved. Finally the intermediate is continuously conveyed, via a comminution zone, to a zone in which the formation of the desired polymer is completed by continuously degassing and melt extruding said intermediate.

## DETAILED DESCRIPTION OF THE INVENTION

The reaction between an organic diisocyanate and a dicarboxylic acid can be represented schematically as follows:

$$X\ OCN-R-NCO + X\ HOOC-R'-COOH \rightarrow \left[ -R-NH\overset{\overset{O}{\|}}{C}-R'-\overset{\overset{O}{\|}}{C}-NH- \right]_X + 2XCO_2$$

wherein R is the residue of the organic polyisocyanate and R' is the residue of the dicarboxylic acid. It will be seen that the reaction gives rise to two moles of carbon dioxide for the reaction of each mole of diisocyanate and dicarboxylic acid. The venting of this carbon dioxide can be controlled reasonably well when the reaction is conducted in an inert organic solvent, particularly in a batch procedure. However, the venting of the carbon dioxide presents a somewhat greater problem when the reaction is attempted in the absence of a solvent, particularly if the reaction is to be carried out on a continuous basis. Attempts to carry out the reaction in, for example, a continuous reactor lead to severe mechanical problems since the evolution of the carbon dioxide in the molten liquid reaction mixture tends to cause foaming with consequent blocking of any vents which might be provided in the reactor.

We have now found that the various problems associated with seeking to carry out the reaction between the diisocyanate and the dicarboxylic acid in the absence of solvent can be overcome in a very convenient manner by carrying out the process in accordance with the present invention to give polymers which have all the desirable properties hitherto associated with the corresponding polymers produced in the presence of inert organic solvent.

The key to success of the process is to conduct the reaction between the diisocyanate and the dicarboxylic acid in such a way that the reaction mixture is spread as a relatively shallow layer in the reaction zone thereby forming a large surface of exposed reaction mixture from which the carbon dioxide can be freely vented. Illustratively, the mixed reactants are spread, for example in the form of a relatively thin layer on a continuously moving conveyor belt which can be provided with raised edges so that it forms a continuous shallow tray and subjected and subjected to heating at the temperatures necessary to initiate and conduct the condensation reaction. Such temperatures are those within the range of about 100°C to about 230°C and preferably in the range of 170°C to about 220°C. Alternatively, the conveyor belt can be used to convey a plurality of shallow open trays into which the reactants are dispensed. The conveyor belt and or the trays carried thereby can then be passed through a heating zone held at a temperature within the ranges set forth above.

The heating of the mixed reactants is continued until the amount of carbon dioxide which has been evolved represents from about 25 percent to about 95 percent of the theoretical which would be eliminated by complete reaction. Preferably the heating is continued until at least 50 percent of the theoretical amount of carbon dioxide has been evolved and most preferably until at least about 70 percent of the theoretical amount has been evolved. When this stage of the process has been completed, the reaction mixture has been converted to an intermediate product, which in many cases is a coarsely foamed product derived by the blowing action of part of the carbon dioxide which has been eliminated. The reaction product so

obtained is then allowed to cool, to solidify. Before proceeding to the next stage of the process this intermediate is treated to reduce it to particulate form in order to permit ease of handling. This reduction to particulate form can be accomplished by any suitable means such as by manual or mechanical crushing, grinding in a mill, and the like. The degree of comminution is not critical.

The final stage of the process of the invention comprises a melting of the intermediate and homogenizing of the melted material and devolatilization by any well-known techniques. For example, the melt can be mixed mechanically by any suitable stirring or agitation. The preferred method of homogenizing is to subject the above described intermediate to a process of melt extrusion using any of the melt extrusion apparatus with venting capability well-known in the art. Advantageously, the final product is extruded as strands which are then subjected to mechanical chopping into pellets for ease of handling in subsequent injection molding procedures.

Whichever method is adopted of carrying out this final stage of the process of the invention it is necessary that the temperature to which the intermediate is subjected during the process be at least about 230°C and preferably higher in order to complete the polymer formation. The temperature should not exceed about 300°C in this stage in order to avoid any significant degradation of the polymer. The most advantageous temperature, within the above limits, to employ in any given case can be determined readily by trial and error.

The initial mixing of the organic isocyanate and the dicarboxylic acid is preferably carried out with the components in the molten state. The mixing of the two liquids can be carried out using any well-known mixing apparatus with the two components being dispensed in substantially stoichiometric proportions necessary to achieve formation of the polyamide. The temperature at which the reactants are mixed is preferably less than that at which any substantial reaction between the two components takes place. Illustratively, the temperature of the two components in the mixing stage is less than about 230°C and preferably less than about 200°C. The mixed components are advantageously dispensed directly into the mixing of reaction zone in which the reaction is to take place. Advantageously, the latter is a shallow heated tray or series of such trays.

The progress of the reaction in the heating stage, as well as being followed by the amount of carbon dioxide which is being eliminated, can also be followed by other routine analytical procedures such as thermal gravimetric analysis (TGA) so as to reveal the degree to which the formation of the amide has progressed. If such procedures are employed, they are followed to determine when the reaction has proceeded so that the desired amount of carbon dioxide has been evolved as discussed above. Similarly, the completion of the reaction in the final melting and homogenization stage can also be followed by such techniques as TGA. In this final stage a further but relatively small amount of carbon dioxide is eliminated but this is generally insufficient to present any problem in the final processing where this processing is carried out in a vented extruder or like means.

Advantageously, the process of the invention can be carried out in the presence of a catalyst. Any of the catalysts known in the art for the reaction between an isocyanate group and a carboxylic acid group can be used. Illustrative of such catalysts are alkali metal alkoxides as described in U.S. 4,001,186, N-alkali metal lactamates as described in U.S. 4,021,412 and phospholene-1-oxides, phospholane-1-oxides, phosphetane-1-oxides, and the corresponding 1-sulfides as described in U.S. 4,156,065. A preferred group of catalysts are the phospholene-1-oxides of which 1,3-dimethyl-2-phospholene-1-oxide, 1,3-dimethyl-3-phospholene-1-oxide and mixtures thereof are typical. The catalysts, when present, are generally employed in amounts from about 0.001 percent by weight to about 5 percent by weight of total reactants depending upon the nature of the catalyst and the desired rate of reaction.

The process of the invention can be employed to prepare thermoplastic polymers from the reaction of organic diisocyanates with dicarboxylic acids of a wide variety as well as from difunctional carboxylic acid terminated polyols to form polyesteramides of the type illustrated by those described in U.S. 4,129,715. The process of the invention can also be employed in the preparation of thermoplastic copolyamide-imides such as those of the type described in U.S. 4,115,372 which involve the reaction of an organic diisocyanate with a mixture of a dicarboxylic acid and a component which contains a carboxylic anhydride group and a free carboxylic acid group of which trimellitic anhydride is representative.

Any of the organic diisocyanates known in the art can be employed in the process of the present invention. Illustrative of such diisocyanates are 4,4'-methylenebis(phenyl isocyanate), mixtures of 4,4'- and 2,4'-methylenebis(phenyl isocyanate), 2,4-toluene diisocyanate, 2,6-toluene diisocyanate, dianisidine diisocyanate, tolidine diisocyanate, m-xylylene diisocyanate, hexamethylene diisocyanate, 4,4'-methylenebis(cyclohexyl isocyanate), 1,5-naphthalene diisocyanate, 1,4-diethylbenzene-$\beta,\beta'$-diisocyanate, as well as mixtures of any two or more of said diisocyanates.

Any of the dicarboxylic acids previously employed in the art to prepare polyamides can be employed in

the process of the invention. Illustrative of said acids are aromatic dicarboxylic acids such as isophthalic, terephthalic, phthalic, benzophenone dicarboxylic and diphenylene dicarboxylic acids; aliphatic dicarboxylic acids such as succinic, adipic, azelaic, pimelic, glutaric, sebacic, decanedioic, dodecanedioic and brassylic acids. A mixture of two or more of the above acids can be employed if desired.

The dicarboxylic acid-terminated prepolymers which are employed in preparing thermoplastic polyesteramides in accordance with the process of the invention can be prepared in a variety of ways. Illustratively the prepolymers can be obtained by reacting an excess (the magnitude of which depends on the final molecular weight desired) of a dicarboxylic acid, which can be any of those described and identified above including mixtures of two or more of said acids, with a monomeric or polymeric diol. The monomeric diols can be any of those conventionally employed in the preparation of polyester diols. Illustrative of monomeric diols are ethylene glycol, propylene glycol, 1,4-butanediol, 1,2-hexanediol, 1,5-pentanediol, and the like.

The polymeric diols which are employed in the preparation of the carboxylic acid-terminated prepolymers as described above, can be any polyether or polyester diols having molecular weights within the range of about 400 to about 4000. Illustrative of polyether diols are the poly(alkylene ether)diols obtained by polymerizing one or more cyclic ethers such as ethylene oxide, propylene oxide, butylene oxide and tetrahydrofuran. The poly(alkylene ether)diols are inclusive of polyethylene glycol, polypropylene glycol, poly(tetramethylene glycol), polypropylene glycols capped with ethylene oxide, random copolymers of ethylene oxide and propylene oxide, and adducts of ethylene oxide, propylene oxide and like alkylene oxides with homopolymers of conjugated alkadienes such as butadiene, isoprene and the like and copolymers of said alkadienes with vinyl monomers such as acrylonitrile, methacrylonitrile, styrene, and the like. Particularly preferred polyether diols for use in preparing the polyester amides of the invention are poly(tetramethylene glycol) and ethylene oxide capped polypropylene glycols wherein the ethylene oxide content is within the range of about 5 percent to about 40 percent.

Illustrative of the polyester diols are those obtained by reacting a dicarboxylic acid or a mixture of dicarboxylic acids such as adipic, suberic, azelaic, glutaric, and 1,12-dodecanedioic acids, with an excess, over the stoichiometric amount, of a dihydric alcohol such as ethylene glycol, propylene glycol, and 1,4-butanediol, including mixtures of two or more such diols.

The polyamides and polyesteramides which are prepared in accordance with the process of the present invention can be employed in any of the many applications which have already been established for the same polyamides and polyesteramides which were prepared in the presence of inert organic solvents in accordance with procedures already known in the art. Such applications include molding by extrusion of hose, tubing, and wire coating, and injection molding to produce articles such as bushings, seal faces, compressor vanes and impellers, pistons and piston rings, gears, thread guides, cams, brake linings, clutch faces, and abrasive articles.

The following examples describe the manner and process of making and using the invention and set forth the best mode contemplated by the inventors of carrying out the invention but are not to be construed as limiting.

Reference Example 1

A mixture of 65.87 g. (0.7 equivs.) of azelaic acid and 21.9 g. (0.3 equivs.) of adipic acid was heated until molten and was then dehydrated by heating under vacuum for 30 minutes at 120 °C in the presence of 0.5% w/w antioxidant (Irganox 1098®). The resulting mixture was poured into an open beaker and 0.625 g. of a mixture of 1,3-dimethyl-2-phospholene-1-oxide and 1,3-dimethyl-3-phospholene-1-oxide was added. To the molten mixture at 120 °C was added, slowly with vigorous stirring, a total of 125 g. (1 equiv.) of molten 4,4'-methylenebis(phenyl isocyanate). The resulting mixture was subjected to stirring by hand. The mixture finally solidified as a coarsely foamed mass. At this point approximately 70 percent of the amount of carbon dioxide which could theoretically be eliminated by the reaction had been lost (as measured by weight loss). The product so obtained was then crushed to a coarse particulate form and was charged to the mixing head of a C. W. Brabender Plasticorder maintained at 280 °C. The port of the mixing head was left open to allow liberated carbon dioxide to vent to the atmosphere. Mixing of the molten mass was continued in the mixing head until evolution of gas substantially ceased. An increase in torque on the drive shaft of the mixing head evidenced the occurrence of polymerization. The resulting product was removed from the mixing head as a brown solid and was determined, by gel permeation chromatography using a polystyrene standard, to have a weight average molecular weight of 103,811.

Reference Example 2

A mixture of 140 g. (1.49 equivs.) of azelaic acid, 46.5 g. (0.64 equivs.) of adipic acid, 4.71 g. (0.016 equivs.) of stearic acid and 0.75 g. of antioxidant (Irganox 1098) was heated until molten at 120°C and the mixture was dehydrated by maintaining the same temperature under vacuum for 30 minutes. The resulting mixture was maintained at the same temperature and vigorously stirred while 0.5 g. of a mixture of 1,3-dimethyl-2-phospholene-1-oxide and 1,3-dimethyl-3-phospholene-1-oxide followed by 207.6 g. (1.66 equivs.) of molten 4,4'-methylenebis(phenyl isocyanate) was added. The stirring was continued for approximately 90 seconds before pouring the molten reaction mixture into an open tray (12.7 cm x 22.9 cm). The tray containing the reaction mixture (ca 1.3 - 1.9 cm thickness) was then placed in a vacuum oven maintained at 220°C and was kept in the oven under vacuum for 30 minutes. The resulting intermediate was allowed to cool to room temperature (circa 20°C) and the resulting coarse foam was granulated using a Waring blender. The coarse powder so derived was then dried for 2 hours at 100°C under vacuum to remove any surface moisture and the dried powder was then passed through a twin screw extruder (Werner-Pfleiderer ZDS K-28) equipped with 2 vent ports. The vent and feed ports were purged by a stream of dry nitrogen during the whole of the process. The shafts of the apparatus were rotated at 45 rpm and the temperature in the 5 independently heated zones was as follows:

| | |
|---|---|
| Feed zone | 293.3° C |
| Zone 2 | 296.1° C |
| Zone 3 | 293.3° C |
| Zone 4 | 271.1° C |
| Zone 5 (Die Zone) | 295.0° C |

The finished polymer was extruded as a ribbon and pelletized and dried in a dehumidifying hopper dryer. The polymer was determined, by gel permeation chromatography using a polystyrene standard, to have a weight average molecular weight of 126,800. Tensile bars, in accordance with ASTM D-638 Type 1 of the polymer were obtained by injection molding and were found to have the following properties.

| | | |
|---|---|---|
| Tensile strength | : | 48344 KPa |
| Elongation | : | 4% |
| Notched Izod Impact: (0.32 cm) | | 7.13 cm kg/cm |

Reference Example 3

The carboxylic acid-terminated hexamethylene adipate, employed in the procedure described in this Example, was prepared as follows:-

To a 1893 l reactor was charged 732.1 kg of hexamethylene adipate diol [Rucoflex S105-110®; Hooker; Eq. wt ca500], 156.5 kg of azelaic acid, 120.2 kg of adipic acid (Du Pont), 717 g. p-toluene sulfonic acid monohydrate, and 490.3 kg xylenes. The reaction solution was heated to the reflux temperature and the water evolved from the condensation reaction was removed by azeotropic distillation. At the completion of the reaction the reactor contents were cooled to 100-120°C and the xylenes were removed by vacuum distillation. The product, 983.8 kg, had an acid number of 103 (Eq. wt. = 545).

A mixture of 1405.3 g. (2.58 equivs.) of a carboxylic acid-terminated hexamethylene adipate prepared as described above, 291.3 g. (3.1 equivs.) of azelaic acid, 24.2 g. of Irganox 1098 and 12.1 g. of lubricant (Advawax 280®) was heated at 120°C for 1 hour to dehydrate the mixture. An aliquot (352.8 g.; 1.156 equivs.) of the resultant mixture was treated, in the molten state, with 0.7 g. of a mixture of 1,3-dimethyl-2-phospholene-1-oxide and 1,3-dimethyl-3-phospholene-1-oxide followed by 147:2 g. (1.173 equivs.) of molten 4,4'-methylenebis(phenyl isocyanate) with vigorous mechanical stirring. The stirring was continued for 60 - 90 seconds before pouring the resultant mixture into an open pan (12.7 x 22.9 cm). The pan and contents were placed in a vacuum oven maintained at 220°C and the product was allowed to remain in the oven under vacuum for 30 minutes. The resulting product was a partially polymerized intermediate in the form of

a coarse foam. This intermediate was allowed to cool to room temperature (circa 20°C) and then was granulated using a commercial rotating knife granulator and the granulated material was dried in a dehumidifying drier. The granulated intermediate was then treated, using the apparatus and procedure described in Example 2 above, to complete the polymerization and to extrude the finished polymer with the exception that the screw speed was increased to 60 rpm, the residence time was approximately 3 minutes and the temperature maintained in the various zones was as follows:

| | |
|---|---|
| Feed zone: | 293.3° C |
| 2nd zone : | 293.3° C |
| 3rd zone : | 293.3° C |
| 4th zone : | 290.6° C |
| 5th zone : (die zone) | 276.7° C |

The polymer so extruded was pelletized and dried. The polymer was a light brown clear material which was determined, by gel permeation chromatography, to have a weight average molecular weight of 210,312 (using a polystyrene standard). The inherent viscosity of the polymer was 0.89 dl/g. in N-methylpyrrolidone. Test sheets (12.1 x 12.1 x 0.16 cm) were prepared by injection molding and found to have an average tensile strength of 3200 psi.

The first step in the above described reaction was repeated using a second aliquot of the same premix and adding the catalyst and diisocyanate as described above. However, the reaction mixture, after vigorous stirring for about 1 minute, was allowed to stand in an open container (3.79 l tub) placed on a weighing balance. No further heat was supplied to the reaction mixture during this period and the weight loss over a period of time was recorded. From the weight loss figures the amount of carbon dioxide vented to the atmosphere was computed as a percentage of the theoretical amount which would be evolved if the reaction went to completion. The values so calculated were as follows.

| Time after mixing (min.) | % carbon dioxide evolved |
|---|---|
| 2 | 14.5 |
| 3 | 22.0 |
| 4.22 | 31.0 |
| 5 | 35.3 |
| 6 | 40.0 |
| 10 | 48.8 |
| 17.5 | 53.2 |

Reference Example 4

An azelaic/adipic acid capped tetramethylene adipate was prepared as follows:-

To a 378.5 1 reactor was charged 28.6 kg of 1,4-butanediol, 77.8 kg of azelaic acid, 86.7 kg of xylenes, and 104.4 g. p-toluene sulfonic acid as a catalyst. The reaction solution was heated to the reflux temperature and the water of condensation from the esterification was removed by azeotropic distillation. At the completion of the reaction the xylenes were removed by vacuum distillation. The product, 93.0 kg had an acid number of 109 (Eq. wt. = 515).

A mixture of 515 g. (1 equiv.) of the above prepolymer, 112.5 g. (1.2 equivs.) of azelaic acid, 3.2 g. of antioxidant (Irganox 1098®) and 3.2 g. of lubricant (Advawax 280®) was prepared by melting the components and the molten mixture was degassed by heating at 120°C for 1 hour under vacuum. The resulting mixture was poured into an open polypropylene beaker and stirred vigorously while 3.2 g. of a mixture of 1,3-dimethyl-2-phospholene-1-oxide and 1,3-dimethyl-3-phospholene-1-oxide was added followed by 275 g. (2.2 equiv.) of molten (60°C) 4,4'-methylenebis(phenyl isocyanate). Reaction ensued immediately. The temperature of the mixture was approximately 100°C. When the initial evolution of carbon dioxide had subsided (circa 60% of theoretical eliminated at this point) the resulting product, in its

container, was transferred to an oven maintained at 100° C and was kept in the oven for 5 minutes. The intermediate so obtained was then granulated and an aliquot was charged to the mixing head of a Brabender Plasticorder preheated to 220° C. The port of the mixing head was left open to the atmosphere to allow carbon dioxide to vent freely. Mixing was continued until gassing substantially ceased. A marked increase in torque load on the shaft of the mixing head indicated polymer formation. Polymer formation was completed by raising the temperature of the mixing chamber to 235° C for a short period. There was thus obtained a brown polymer free of bubbles.

## Claims

1. A continuous process for the preparation, in the absence of an inert organic solvent, of a thermoplastic polymer with a recurring amide linkage by reacting an organic diisocyanate and a dicarboxylic acid in substantially stoichiometric proportions characterized by the steps of:
   (a) continuously feeding an organic diisocyanate and a dicarboxylic acid in the liquid state and in substantially stoichiometric proportions to a mixing zone;
   (b) mixing said reactants in said mixing zone and continuously passing said mixed reactants spread in the the form of a relatively thin layer on a continuously moving conveyor means through a heating zone maintained at a temperature in the range of 100° C to 230° C the residence time in said heating zone being adjusted so that between 25 percent to 95 percent of the theoretical amount of carbon dioxide necessary to achieve complete reaction has been evolved, and allow it to cool to solidify to an intermediate which is reduced to particulate form and
   (c) completing the formation of the desired polymer by continuously melt extruding the intermediate so formed at a temperature above 230° C but below that at which degradation of the polymer occurs.

2. Process according to claim 1, characterized in that step (a) is carried out at a temperature less than that at which any significant reaction occurs.

3. Process according to claim 1, characterized in that in step (b) the mixed reactants are continuously passed to a continuously moving endless conveyor belt for passing same through the heating zone.

4. A process according to claim 1, characterized in that the residence time in said heating zone is adjusted so that at least 50 percent of the theoretical amount of carbon dioxide has been evolved.

## Revendications

1. Procédé en continu pour la préparation, en l'absence de solvant organique inerte, d'un polymère thermoplastique possédant une liaison amide récurrente, qui consiste à faire réagir un diisocyanate organique et un acide dicarboxylique, dans des proportions sensiblement stoechiométriques, caractérisé par les étapes suivantes :
   (a) charger en continu un diisocyanate organique et un acide dicarboxylique, à l'état liquide et en proportions sensiblement stoechiométriques, dans une zone de mélange;
   (b) mélanger lesdits réactifs dans ladite zone de mélange et envoyer en continu les réactifs mélangés, étalés sous forme d'une couche relativement mince sur un transporteur en mouvement continu, à travers une zone de chauffage maintenue à une température dans le domaine de 100° C à 230° C, le temps de séjour dans ladite zone de chauffage étant ajusté de manière qu'entre 25% et 95% de la quantité théorique de gaz carbonique correspondant à l'obtention d'une réaction complète se soit dégagée, et laisser le produit refroidir pour qu'il se solidifie en un intermédiaire qui est réduit en forme particulaire, et
   (c) achever la formation du polymère recherché en extrudant avec fusion, en continu, l'intermédiaire ainsi formé, à une température supérieure à 230° C, mais inférieure à la température de décomposition du polymère.

2. Procédé selon la revendication 1, caractérisé en ce que l'étape (a) est réalisée à une température inférieure à celle à laquelle se produit une réaction significative.

3. Procédé selon la revendication 1, caractérisée en ce que, dans l'étape (b), les réactifs mélangés sont envoyés en continu sur une bande transporteuse sans fin en mouvement continu qui sert à leur faire

traverser la zone de chauffage.

4. Procédé selon la revendication 1, caractérisé en ce que le temps de séjour dans ladite zone de chauffage est ajusté de manière à ce qu'au moins 50% de la quantité théorique de gaz carbonique se dégage.

**Patentansprüche**

1. Kontinuierliches Verfahren zur Herstellung eines thermoplastischen Polymerisats mit einer wiederkehrenden Amidbindung durch Umsetzen eines organischen Diisocyanats und einer Dicarbonsäure in praktisch stöchiometrischen Mengen in Abwesenheit eines inerten organischen Lösungsmittels, gekennzeichnet durch folgende Stufen:
   (a) kontinuierliche Zufuhr eines organischen Diisocyanats und einer Dicarbonsäure in flüssigem Zustand und in praktisch stöchiometrischen Mengen zu einer Mischzone;
   (b) Vermischen der Reaktionsteilnehmer in der Mischzone und kontinuierliches Hindurchleiten der in Form einer relativ dünnen Schicht auf einer sich kontinuierlich bewegenden Fördereinrichtung ausgebreiteten Reaktionsteilnehmermischung durch eine auf einer Temperatur im Bereich von 100 - 230 °C gehaltene Heizzone, wobei die Aufenthaltsdauer in der Heizzone derart eingestellt wird, daß zwischen 25% und 95% der zum Erreichen einer vollständigen Umsetzung erforderlichen theoretischen Kohlendioxidmenge entwichen sind, und Abkühlenlassen (des Reaktionsprodukts) zur Verfestigung zu einem Zwischenprodukt, das zu einer Teilchenform zerkleinert wird, und
   (c) Beendigung der Bildung des gewünschten Polymerisats durch kontinuierliches Schmelzextrudieren des gebildeten Zwischenprodukts bei einer Temperatur oberhalb 230 °C, jedoch unterhalb einer Temperatur, bei der ein Abbau des Polymerisats erfolgt.

2. Verfahren nach Anspruch 1, dadurch gekennzeichnet, daß Stufe (a) bei einer Temperatur unterhalb derjenigen, bei der eine merkliche Reaktion erfolgt, durchgeführt wird.

3. Verfahren nach Anspruch 1, dadurch gekennzeichnet, daß in Stufe (b) das Reaktionsteilnehmergemisch kontinuierlich einem sich kontinuierlich bewegenden endlosen Förderband zum Hindurchleiten desselben durch die Heizzone zugeführt wird.

4. Verfahren nach Anspruch 1, dadurch gekennzeichnet, daß die Aufenthaltsdauer in der Heizzone derart eingestellt wird, daß mindestens 50% der theoretischen Kohlendioxidmenge entwichen sind.